# EUROPEAN PATENT SPECIFICATION

(11) **EP 4 350 663 B1**
(45) Date of publication and mention of the grant of the patent: **01.04.2026**
(21) Application number: 22811108.4
(22) Date of filing: 26.04.2022
(51) Int. Cl.: G08G 1/16, B60W 40/02, B60W 30/00, B60W 60/00, B60W 30/14, B60W 50/00

(54) **VEHICLE MOTION CONTROL DEVICE AND VEHICLE MOTION CONTROL METHOD**
VORRICHTUNG UND VERFAHREN ZUR FAHRZEUGBEWEGUNGSSTEUERUNG
DISPOSITIF DE COMMANDE DE MOUVEMENT DE VÉHICULE ET PROCÉDÉ DE COMMANDE DE MOUVEMENT DE VÉHICULE

(30) Priority: 27.05.2021 JP 2021089343
(43) Date of publication of application: 10.04.2024
(73) Proprietor: Astemo, Ltd., Tokyo 100-0004 (JP)
(72) Inventor: NASU Shingo, Tokyo 100-8280 (JP); UENO Kentarou, Hitachinaka-shi, Ibaraki 312-8503 (JP); YAMASAKI Masaru, Tokyo 100-8280 (JP)
(74) Representative: Strehl & Partner mbB
(86) International application number: PCT/JP2022/018822
(87) International publication number: WO 2022/249834

(56) References cited:
- EP-A1- 3 342 657
- JP-A- 2016 143 240
- JP-A- 2018 203 006
- JP-A- 2018 203 084
- US-A1- 2008 078 600
- US-A1- 2009 319 112
- US-A1- 2018 345 967
- US-A1- 2020 339 153

## Description

### Technical Field

The present invention relates to a vehicle motion control device and a vehicle motion control method for controlling motion of a vehicle.

### Background Art

A type of vehicle motion control techniques, such as autonomous driving or driving support, is known to generate a travel path including information such as a travel route and travel speed, each as a travel target of the vehicle, and to control a powertrain, a brake, a steering, and others, so that the vehicle travels along the travel path. A simplest technique to control the vehicle to travel along the travel route is, for example, to set a center of a lane as the travel route.

PTL 1 discloses a more advanced technique to control a vehicle to travel along a travel route. For example, PTL 1 discloses, in claim 1, a vehicle control device "comprising: ... a speed distribution setting part configured to set a speed limit distribution defining a permissible upper limit relative speed, around the surrounding vehicle detected by the surrounding vehicle detection part; and a control part configured to control a speed and/or steering of the own vehicle to satisfy the speed limit distribution set by the speed distribution setting part, wherein the speed distribution setting part is configured to set the speed limit distribution such that the speed limit distribution is different for when the information regarding the traveling state of the surrounding vehicle has been able to be acquired via the vehicle information receiving part, and when no information regarding the traveling state of the surrounding vehicle has been able to be acquired via the vehicle information receiving part", and in claim 2, "the vehicle control device ... wherein the speed distribution setting part is configured to lower a speed limit in the speed limit distribution, when no information regarding the traveling state of the surrounding vehicle has been able to be acquired".

The vehicle control device disclosed in PTL 1 is configured to control vehicle motion by setting a speed limit for relative speed between the own vehicle and the surrounding vehicle traveling around the own vehicle, and sets a different speed limit in accordance with whether or not the traveling state of the surrounding vehicle is acquired. When the traveling state of the surrounding vehicle is not acquired, the vehicle control device decreases the speed limit such that the own vehicle is less likely to undergo sudden deceleration or steering due to a behavior of the surrounding vehicle and the driver is thus less likely to feel insecure.

### Citation List

### Patent Literature

PTL 1: JP 2019-142303 A

US 2008/078600 A1 discloses a vehicle motion control device with the features in the preamble of present claim 1. Another conventional vehicle motion control device is described in US 2018/345967 A1.

### Summary of Invention

### Technical Problem

However, the vehicle control device disclosed in PTL 1 is not configured to set speed of the own vehicle in consideration of curves far ahead that a sensor in the own vehicle does not detect, and thus, is not likely to increase ride comfort of occupants. In other words, with the vehicle control device above, the speed of the own vehicle is set only based on surrounding (nearby) information of the own vehicle detected by the sensor. Then, when the own vehicle has moved forward a predetermined distance, the sensor may detect the curve ahead of the own vehicle. In this case, the speed of the own vehicle needs to fall far below the set speed, thereby resulting in an unstable behavior of the vehicle.

In view of the respects described above, an object of the present invention is to provide a vehicle motion control device and a vehicle motion control method, each configured to set the speed of the own vehicle in consideration of the nearby information of the own vehicle together with long-distance information of the own vehicle, so as to reduce the unstable behavior of the vehicle.

### Solution to Problem

In order to achieve the object, the present invention provides a vehicle motion control device and method as defined in the present independent claims.

### Advantageous Effects of Invention

The present invention provides a vehicle motion control device or a vehicle motion control method configured to generate a speed command value in consideration of nearby information and long-distance information of an own vehicle, so as to reduce an unstable behavior of the vehicle such as emergency braking. Problems, configurations, and effects other than those described above will be clarified by description of embodiments below.

### Brief Description of Drawings

[FIG. 1] FIG. 1 is a functional block diagram of an in-vehicle system according to a first embodiment.
[FIG. 2] FIG. 2 is a functional block diagram of a travel path generation unit according to the first embodiment.
[FIG. 3] FIG. 3 is a functional block diagram of a speed planning unit according to the first embodiment.
[FIG. 4] FIG. 4 is a flowchart describing an outline of processing of a travel speed generation unit according to the first embodiment.
[FIG. 5] FIG. 5 is a plan view of a travel route A.
[FIG. 6A] FIG. 6A is a graph of a route command value when traveling along the travel route A under conventional control.
[FIG. 6B] FIG. 6B is a graph of a speed command value when traveling along the travel route A under the conventional control.
[FIG. 6C] FIG. 6C is a graph of a long-distance route when traveling along the travel route A under control according to the first embodiment.
[FIG. 6D] FIG. 6D is a graph of the speed command value when traveling along the travel route A under the control according to the first embodiment.
[FIG. 7] FIG. 7 is a functional block diagram of a speed planning unit according to a second embodiment.

### Description of Embodiments

A vehicle motion control device according to an embodiment of the present invention will be described below with reference to the drawings. Note that, substantially the same or similar configurations are denoted by the same reference signs, and in a case where descriptions overlap, the description thereof may be omitted. Additionally, descriptions of known techniques may be omitted.

### First Embodiment

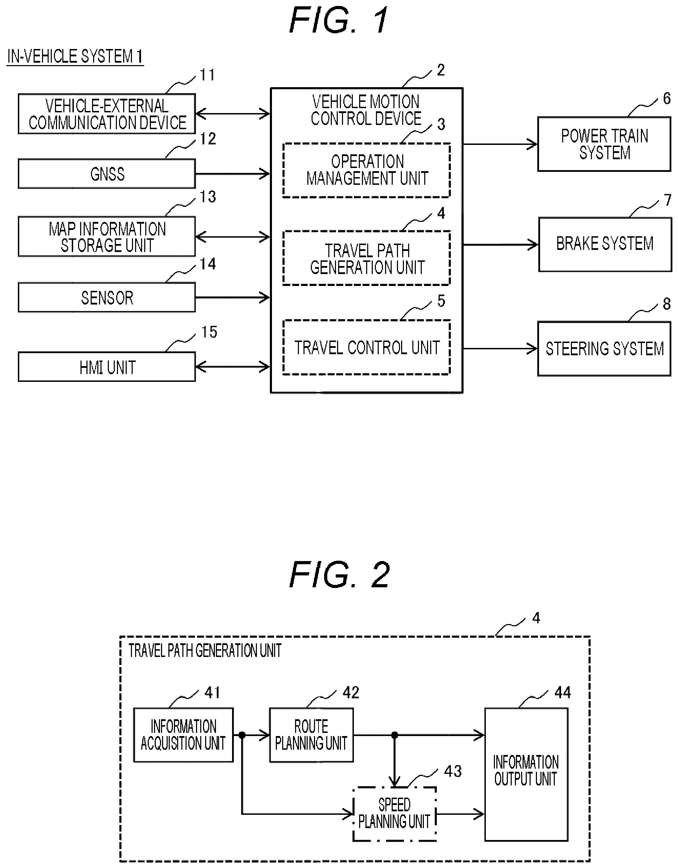

First, a vehicle motion control device 2 according to a first embodiment of the present invention will be described with reference to FIGS. 1 to 6D.

### <In-vehicle system 1>

FIG. 1 is a functional block diagram of an in-vehicle system 1 including a vehicle motion control device 2 of this embodiment. The in-vehicle system 1 is installed in an own vehicle and executes vehicle motion control such as driving support or autonomous driving. As shown in FIG. 1, the in-vehicle system 1 includes a vehicle-external communication device 11, a global navigation satellite system (GNSS) 12, a map information storage unit 13, a sensor 14, a human machine interface (HMI) unit 15, a vehicle motion control device 2, a power train system 6, a brake system 7, and a steering system 8. These will be described sequentially below.

### <Information source for vehicle motion control device 2>

The vehicle-external communication device 11 executes inter-vehicle communication between the own vehicle and other vehicles or road-to-vehicle communication between the own vehicle and a roadside device through wireless communication, and transmit/receives information of the vehicles and a surrounding environment.

The GNSS 12 receives a radio wave transmitted from an artificial satellite such as a quasi-zenith satellite or a global positioning system (GPS) satellite, and acquires information such as a position of the own vehicle.

The map information storage unit 13 stores general road information used in a navigation system or the like, road information including information related to a width of the road or a curve, e.g., curvature, of the road, information of a road surface condition or a traffic condition, and the information of the vehicles and the surrounding environment as information of travel states of the other vehicles. Based on information acquired through the inter-vehicle communication or the road-to-vehicle communication executed by the vehicle-external communication device 11, the information of the vehicles and the surrounding environment is sequentially updated.

The sensor 14 corresponds to an external recognition sensor such as an image sensor, a millimeter-wave radar, or a rider for detecting the information of the vehicles and the surrounding environment, or a sensor for detecting information such as an operation by a driver, speed, acceleration, jerk, or angular velocity of the vehicle, or a steering angle of a wheel of the vehicle. The information of the vehicle and the surrounding environment detected by the external recognition sensor is, for example, information of various objects surrounding the own vehicle, such as an obstacle, a sign, a lane boundary, a lane edge line, a building, a pedestrian, or the other vehicles. The sensor 14 recognizes the lane boundary or the lane edge line based on, for example, a difference in luminance between a white line and a road surface in image data captured by the image sensor.

The HMI unit 15 displays, on a display, information required by a user based on information received by an input operation of the user, such as selection of a travel mode or setting of a destination, information acquired by the vehicle-external communication device 11, the GNSS 12, and the sensor 14, or information stored in the map information storage unit 13, and provides voice guidance from a speaker. Additionally, the HMI unit 15 generates an alarm for calling the user's attention.

Here, the travel mode includes, for example, a comfort mode, an economy mode, a sport mode, and others, and the travel mode is optionally or previously set by the user, or is set by an operation management unit 3 based on travel state information as will be described later; and the speed, the acceleration, the jerk, and others of the vehicle are to be set. In other words, an upper limit value of a behavior of the vehicle changes in correspondence to the travel mode. Further, the travel mode includes a shortest time mode for minimizing the travel time, and a shortest distance mode for minimizing the travel distance.

### <Vehicle motion control device 2>

As shown in FIG. 1, the vehicle motion control device 2 includes an operation management unit 3, a travel path generation unit 4, and a travel control unit 5. Specifically, the vehicle motion control device 2 is an electronic control unit (ECU) that includes hardware such as an arithmetic device (e.g., a central processing unit (CPU)), a main storage device and an auxiliary storage device such as semiconductor memories, and a communication device, to perform centralized control on the vehicle. The arithmetic device executes programs loaded into the main storage device to cause various functions of the operation management unit 3 and others to be implemented. Note that, in this embodiment, for convenience of description, the operation management unit 3, the travel path generation unit 4, and the travel control unit 5 have separate configurations, but do not necessarily have the separate configurations. When these units are included in an actual vehicle, various functions of these units may be implemented by a higher-level controller.

Based on the information acquired by the vehicle-external communication device 11, the GNSS 12, and the sensor 14 together with the map information stored in the map information storage unit 13, the operation management unit 3 generates the information of the position of the own vehicle, the information of various objects surrounding the own vehicle (i.e., the information of the vehicles and the surrounding environment), and information related to the behavior of the vehicle such as lateral acceleration, a yaw rate, or a lateral jerk. The operation management unit 3 periodically transmits the information of the position of the own vehicle, the information of the various objects, and the information related to the behavior of the vehicle, through the vehicle-external communication device 11, to the other vehicles and the roadside devices, and concurrently transmits to the map information storage unit 13, so that the map information stored in the map information storage unit 13 is sequentially updated. Further, based on the information of the position of the own vehicle, the information of the various objects, the information related to the behavior of the vehicle, and the information (e.g., the travel mode or the destination) received by the HMI unit 15, the operation management unit 3 sets information of a route from a current position of the vehicle to the destination. Hereinafter, the information generated or set by the operation management unit 3 may be referred to as the "travel state information".

As shown in FIG. 2, the travel path generation unit 4 includes an information acquisition unit 41, a route planning unit 42, a speed planning unit 43, and an information output unit 44. Based on the travel state information transmitted from the operation management unit 3 and acquired by the information acquisition unit 41, the travel path generation unit 4 causes the route planning unit 42 to generate a route (hereinafter, referred to as a "route command value P") as a travel target when the vehicle travels along the road. Here, the route command value P is generated based on, for example, any one of nearby information of the own vehicle acquired by the sensor 14 or information combining the nearby information and long-distance map information stored in the map information storage unit 13, but the method for generating the route command value P is not limited. The speed planning unit 43 generates speed (hereinafter, referred to as a "speed command value") as the travel target when the vehicle travels along the road based on the route command value P and information related to the travel route. Then, the information output unit 44 outputs a travel path including information such as the route command value P and the speed command value. The speed planning unit 43 will be described in detail later.

The travel control unit 5 sets target driving force, target braking force, a target steering angle, and others so that the vehicle travels along the travel path outputted from the travel path generation unit 4, and controls the power train system 6, the brake system 7, and the steering system 8.

### <Control by vehicle motion control device 2>

The power train system 6 controls driving force generated by an internal combustion engine, an electric motor, or others based on the operation by the driver or the target driving force outputted from the travel control unit 5.

Based on the operation by the driver or the target braking force outputted from the travel control unit 5, the brake system 7 controls braking force generated by a brake caliper or others.

Based on the operation by the driver or the target steering angle outputted from the travel control unit 5, the steering system 8 controls the steering angle of the wheel.

### <Speed planning unit 43>

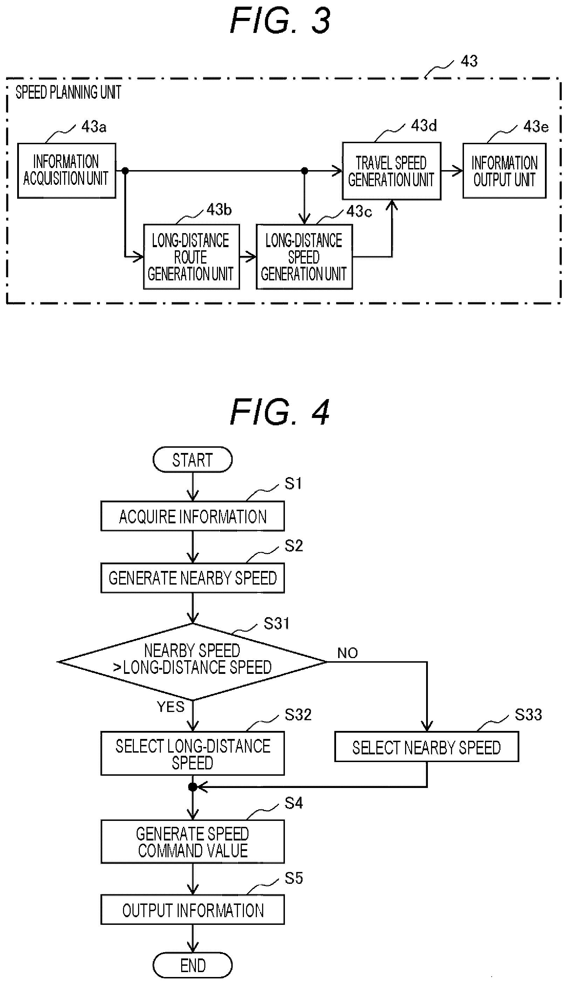

Next, the speed planning unit 43 will be described in detail with reference to FIG. 3. FIG. 3 is a functional block diagram of the speed planning unit 43. The speed planning unit 43 generates the speed command value of the vehicle based on the position or the speed of the vehicle, the upper limit value of the behavior, the route command value P, or others. The speed planning unit 43 includes an information acquisition unit 43a, a long-distance route generation unit 43b, a long-distance speed generation unit 43c, a travel speed generation unit 43d, and an information output unit 43e. These will be described sequentially below.

The information acquisition unit 43a acquires the travel state information from the operation management unit 3, and acquires the route command value P from the route planning unit 42. Then, the information acquisition unit 43a outputs the travel state information and the route command value P to each unit in the speed planning unit 43.

Based on the surrounding map included in the travel state information acquired from the information acquisition unit 43a, the long-distance route generation unit 43b generates a route (hereinafter, referred to as a "long-distance route F") to a long-distance area (e.g., 200 m ahead of the own vehicle) beyond an area detectable by the sensor 14. When the route planning unit 42 generates the route command value P, in order to avoid collisions between the own vehicle and surrounding vehicles or others, the calculation load is greater, thereby hindering the route planning unit 42 from generating the route command value P in correspondence to the long-distance travel. Thus, in this embodiment, the long-distance route generation unit 43b generates the long-distance route F requiring less calculation load to compensate for long-distance route information that is not covered by the route command value P. Here, the long-distance route F generated by the long-distance route generation unit 43b may have the same start point as the route command value P or may have a start point corresponding to an end point of the route command value P. Accordingly, the long-distance route F is not restrictive.

Based on the travel state information from the information acquisition unit 43a and the long-distance route F from the long-distance route generation unit 43b, the long-distance speed generation unit 43c generates speed (hereinafter, referred to as "long-distance speed") at which a physical quantity falls within a specified value, the physical quantity being related to the behavior of the vehicle when the own vehicle travels along the long-distance route F. Here, the specified value may be a predetermined value in consideration of ride comfort or the like or may be a limit value of the vehicle based on a road surface friction coefficient acquired by the sensor 14; and thus, the specified value is not restrictive. The speed, at which the physical quantity related to the behavior of the vehicle falls within the specified value, may be a speed on assumption of steady circular turning resulted from a square root of a value obtained by dividing a specified value of the lateral acceleration by curvature of the travel route, a speed obtained by integrating a specified value of longitudinal acceleration, or a legal maximum speed or an optional speed limit in a general road. Accordingly, the speed, at which the physical quantity related to the behavior of the vehicle falls within the specified value, is not obtained by any restrictive method.

Based on the travel state information and the route command value P from the information acquisition unit 43a, together with the long-distance speed from the long-distance speed generation unit 43c, the travel speed generation unit 43d generates the speed command value when the own vehicle travels along the route command value P. Here, when the route command value P is substantially equal in distance to the long-distance route F, the travel speed generation unit 43d may generate the speed command value only based on the route command value P. Accordingly, values inputted by the travel speed generation unit 43d to generate the speed command value are not restrictive. Further, when the vehicle motion control device 2 undergoes far greater calculation load or when the long-distance route F has far lower accuracy, the travel speed generation unit 43d may give the long-distance route F a less priority or may not use the long-distance route F to generate the speed command value. Accordingly, the values inputted by the travel speed generation unit 43d to generate the speed command value are not restrictive.

The information output unit 43e outputs, to the information output unit 44, the speed command value from the travel speed generation unit 43d.

### <Processing of travel speed generation unit 43d >

Next, an outline of processing of the travel speed generation unit 43d will be described with reference to a flowchart of FIG. 4.

First, in step S1, the travel speed generation unit 43d acquires the travel state information and the route command value P from the information acquisition unit 43a, and acquires the long-distance speed from the long-distance speed generation unit 43c.

In step S2, based on the travel state information and the route command value P acquired in the step S1, the travel speed generation unit 43d generates the speed (hereinafter, referred to as "nearby speed") at which a physical quantity falls within a specified value, the physical quantity being related to the behavior of the vehicle when the vehicle travels only along the route command value P.

In step S31, based on the long-distance speed acquired in the step S1 and the nearby speed generated in the step S2, the travel speed generation unit 43d determines whether or not the nearby speed is greater than the long-distance speed in an overlapping range of the route command value P and the long-distance route F. When the nearby speed is greater than the long-distance speed (YES in the step S31), the process proceeds to step S32; and when the nearby speed is equal to or smaller than the long-distance speed (NO in the step S31), the process proceeds to step S33. Here, the nearby speed and the long-distance speed may be compared in a range corresponding to the entire overlapping range of the route command value P and the long-distance route F, or may be compared only at the end point of the route command value P. Accordingly, the range, in which the nearby speed and the long-distance speed are compared, is not restrictive.

In the step S32, the travel speed generation unit 43d selects the long-distance speed that is at a relatively smaller speed, while in the step S33, the travel speed generation unit 43d selects the nearby speed that is at the relatively smaller speed.

In step S4, based on the long-distance speed or the nearby speed selected, the travel speed generation unit 43d generates the speed command value at which a physical quantity falls within a specified value, the being physical quantity related to the behavior of the vehicle when the own vehicle travels along the route command value P as well as along the long-distance route F beyond the route command value P.

In step S5, the speed command value generated in the step S4 is outputted to the information output unit 43e.

### <Travel route A>

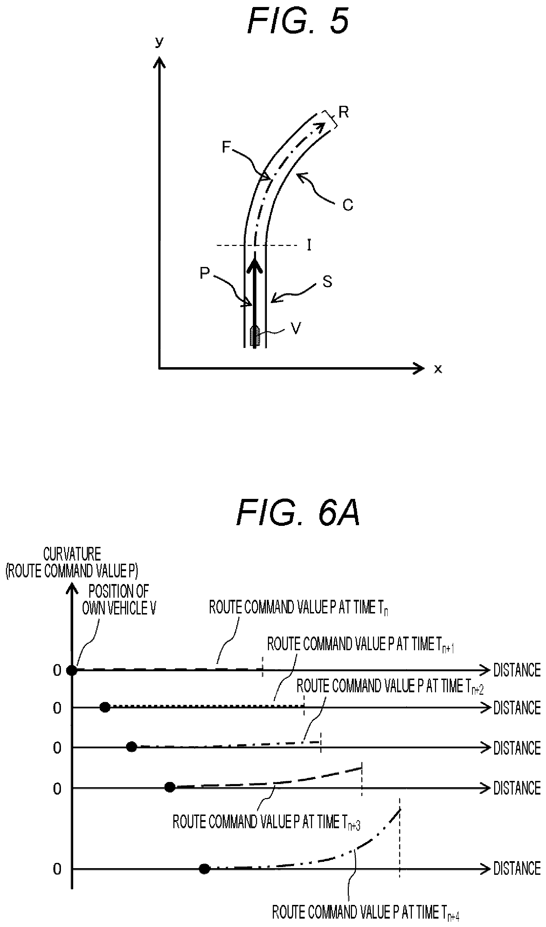

Next, the route command value P and the speed command value, each generated from moment to moment while an own vehicle V travels along a travel route A in FIG. 5, will be described with reference to FIGS. 6A to 6D.

FIG. 5 is a plan view of the travel route A along which the own vehicle V travels, and shows an example of the route command value P and the long-distance route F, each set within a travelable region R of the own vehicle V at time Tₙ. The travelable region R includes an inflection point I as a start point of right turn, a straight line path S as a section up until the inflection point I, and a curve C as a section beyond the inflection point I. At the time Tₙ of FIG. 5, the sensor 14 of the own vehicle V detects only the straight line path S in the travelable region R and thus, the route command value P generated by the route planning unit 42 of the own vehicle V is linear as shown by an arrow in FIG. 5. As the own vehicle V moves forward to approach the inflection point I, the sensor 14 detects the curve C, causing the route command value P to be formed into a curved shape.

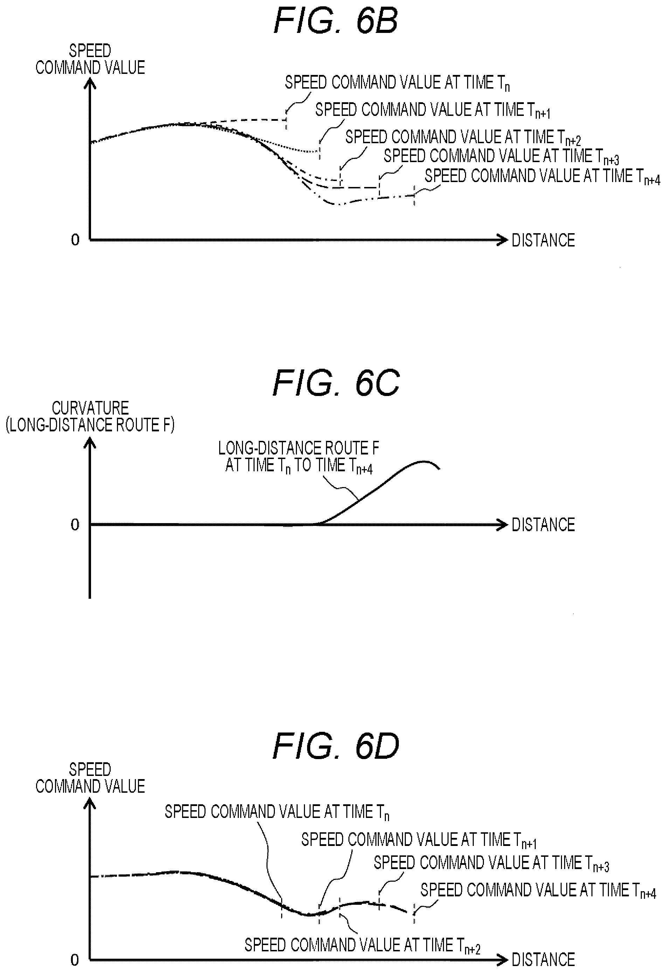

FIG. 6A is a graph of curvature of the route command value P when the own vehicle V of FIG. 5 travels under conventional control, and FIG. 6B is a graph showing an example of the speed command value generated based on the route command value P of FIG. 6A. FIG. 6C is a graph of curvature of the long-distance route F when the own vehicle V of FIG. 5 travels under the control according to this embodiment, and FIG. 6D is a graph of the speed command value when the own vehicle V of FIG. 5 travels under the control according to this embodiment. Each of FIGS. 6A to 6D shows the example of the route command value or others generated during a period from the time Tₙ to time Tₙ₊₄. In each of FIGS. 6A to 6D, a broken line represents a value of the time Tₙ, a dotted line represents a value of the time Tₙ₊₁, a one-dot chain line represents a value of time Tₙ₊₂, a long broken line represents a value of time Tₙ₊₃, and a long two-dot chain line represents a value of time Tₙ₊₄.

As shown in FIG. 6A, when the vehicle V is at the position of FIG. 5, the curvature of the route command value P at the time Tₙ is zero (straight line). In the conventional control, under which the speed command value is generated only based on the route command value P at this time Tₙ, the speed command value is generated mainly based on a specified value related to a longitudinal motion of the own vehicle V such as the longitudinal acceleration. Thus, when the speed command value still has a margin to the specified value, the speed command value increases as shown with the speed command value at the time Tₙ (broken line) in FIG. 6B.

When the own vehicle V moves forward to approach the curve C, as shown with the route command value P from the time Tₙ₊₂ to the time Tₙ₊₄ in FIG. 6A, the route command value P as the curvature of the curve C is generated. Then, in correspondence to the curvature of the route command value P, and based on a specified value related to lateral motion of the own vehicle V such as the lateral acceleration, the speed command value (see FIG. 6B) rapidly decreases.

As has been described above, in the conventional control shown in FIGS. 6A and 6B, the speed command value significantly changes between before and after the sensor 14 detects the curve C, and the rapid decrease in the speed command value cannot fall within the specified value related to the decrease in longitudinal acceleration. This may lead to a rapid change in speed, resulting in degraded ride comfort of occupants.

On the other hand, in the speed control of this embodiment, as has been described in the flowchart of FIG. 4, the speed command value is generated, from the time Tₙ onward, in consideration of the curvature of the route command value P (as shown in FIG. 6A), in addition to the curvature of the long-distance route F including the curve C (as shown in FIG. 6C). As a result, as shown in FIG. 6D, the speed command value generated at one point of time constantly and substantially matches the speed command value generated at a next point following the one point of time. This not only causes the change in speed to be smoother than in the conventional control, but also causes the physical quantity related to the behavior of the vehicle to fall within the specified value where the ride comfort of the occupants is maintained.

Accordingly, in this embodiment, the change in speed is smoother, and the physical quantity related to the behavior of the vehicle falls within the specified value. In other words, with the speed control of this embodiment, the behavior of the own vehicle is less prone to be unstable (e.g., emergency braking) than in the conventional method, thereby resulting in increased ride comfort of the occupants.

### Second Embodiment

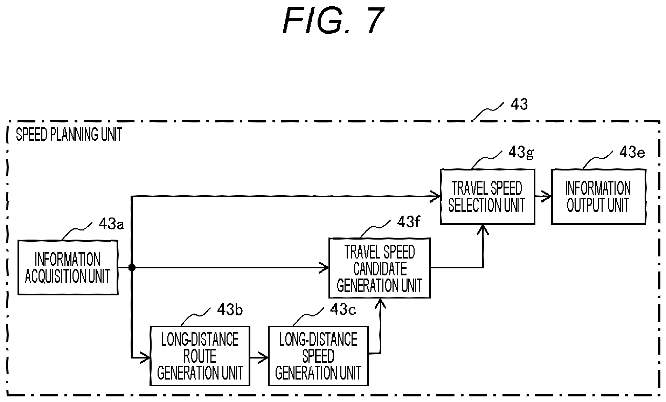

First, a vehicle motion control device 2 according to a second embodiment of the present invention will be described with reference to FIG. 7. Here, a detailed description of the same configurations as in the first embodiment will be omitted.

FIG. 7 is a functional block diagram of a speed planning unit 43 according to the second embodiment. Unlike the speed planning unit 43 of the first embodiment in FIG. 3, the speed planning unit 43 of this embodiment in FIG. 7 includes a travel speed candidate generation unit 43f instead of the travel speed generation unit 43d, and additionally includes a travel speed selection unit 43g.

Based on the travel state information and the route command value P from the information acquisition unit 43a, together with the long-distance speed from the long-distance speed generation unit 43c, the travel speed candidate generation unit 43f generates a plurality of speed command value candidates at which a physical quantity falls within a specified value, the physical quantity being related to the behavior of the vehicle when the vehicle travels along one or both of the route command value P and the long-distance route F. Then, the travel speed candidate generation unit 43f outputs the plurality of speed command value candidates to the travel speed selection unit 43g.

Based on a current travel mode (e.g., the shortest time mode or the economy mode) indicated by the travel state information from the information acquisition unit 43a and the plurality of speed command value candidates from the travel speed candidate generation unit 43f, the travel speed selection unit 43g selects one of the plurality of speed command value candidates as a speed command value, and the information output unit 43e outputs the speed command value to the travel control unit 5. For example, when the travel state information indicates the shortest time mode, the travel speed selection unit 43g selects, from the plurality of speed command value candidates generated by the travel speed candidate generation unit 43f, one having a shortest period of travel time; and when the travel state information indicates the economy mode, the travel speed selection unit 43g selects, from the plurality of speed command value candidates, one exhibiting a smallest consumption energy. In other words, the travel speed selection unit 43g selects, from the plurality of speed command value candidates, the speed command value having the shortest period of travel time or the speed command value exhibiting the smallest consumption energy.

As has been described above, the vehicle motion control device according to the second embodiment provides, in addition to the same (or similar) effects as (or to) in the first embodiment, control vehicle operation in correspondence to the travel mode selected.

### Reference Signs List

1 in-vehicle system
11 vehicle-external communication device
12 GNSS
13 map information storage unit
14 sensor
15 HMI unit
2 vehicle motion control device
3 operation management unit
4 travel path generation unit
41 information acquisition unit
42 route planning unit
43 speed planning unit
43a information acquisition unit
43b long-distance route generation unit
43c long-distance speed generation unit
43d travel speed generation unit
43e information output unit
43f travel speed candidate generation unit
43g travel speed selection unit
44 information output unit
5 travel control unit
6 power train system
7 brake system
8 steering system
C curve
I inflection point
P route command value
F long-distance route
R travelable region
S straight line path
V own vehicle

## Claims

1. A vehicle motion control device (2) comprising:
a nearby information acquisition unit (41) configured to acquire nearby information of a vehicle (V), wherein the nearby information corresponds to information surrounding the vehicle (V) acquired from a sensor (14) that detects a surrounding environment of the vehicle (V);
a long-distance information acquisition unit configured to acquire long-distance information of the vehicle (V), wherein the long-distance information corresponds to information surrounding the vehicle (V) beyond an area detectable by the sensor (14) acquired from a map information storage unit (13) that stores map information;
a speed planning unit (43) configured to generate a speed command value as a travel target of the vehicle (V), based on the nearby information and the long-distance information;
a route planning unit (42) configured to generate a route command value (P) as the travel target of the vehicle (V), based on the nearby information, wherein the speed planning unit (43) generates the speed command value of the vehicle (V) based on the route command value (P); and
a long-distance route generation unit (43b) configured to generate a long-distance route (F) as a route extending beyond the route command value (P), based on the long-distance information,
**characterized in that** the speed planning unit (43) is configured to select, from the speed command value based on the route command value (P) and the speed command value based on the long-distance route (F), the speed command value at a smaller speed, and outputs the speed command value selected.

2. The vehicle motion control device (2) according to claim 1, wherein the speed planning unit (43) generates the speed command value at which a physical quantity is within a specified value, the physical quantity being related to a behavior of the vehicle (V) when the vehicle (V) travels along the route command value (P) and the long-distance route (F).

3. The vehicle motion control device (2) according to claim 1 or 2, wherein based on required calculation load or accuracy of the long-distance information, the speed planning unit (43) changes priority of information for using to generate the speed command value or selects information for using to generate the speed command value.

4. A vehicle motion control method comprising the steps of:
acquiring nearby information of a vehicle (V), wherein the nearby information corresponds to information surrounding the vehicle (V) acquired from a sensor (14) that detects a surrounding environment of the vehicle (V);
acquiring long-distance information of the vehicle (V), wherein the long-distance information corresponds to information surrounding the vehicle (V) beyond an area detectable by the sensor (14) acquired from a map information storage unit (13) that stores map information;
generating a speed command value as a travel target of the vehicle (V), based on the nearby information and the long-distance information;
generating a route command value (P) as the travel target of the vehicle (V), based on the nearby information;
generating the speed command value of the vehicle (V) based on the route command value (P);
generating a long-distance route (F) as a route extending beyond the route command value (P), based on the long-distance information; and
selecting, from the speed command value based on the route command value (P) and the speed command value based on the long-distance route (F), the speed command value at a smaller speed, and outputting the speed command value selected.

## Patentansprüche

1. Fahrzeugbewegungssteuervorrichtung (2), umfassend:
eine Nahbereichsinformationserfassungseinheit (41), die dazu konfiguriert ist, Nahbereichsinformationen eines Fahrzeugs (V) zu erfassen, wobei die Nahbereichsinformationen Informationen entsprechen, die das Fahrzeug (V) umgeben und von einem Sensor (14) erfasst werden, der eine Umgebung des Fahrzeugs (V) erfasst;
eine Fernbereichsinformationserfassungseinheit, die dazu konfiguriert ist, Fernbereichsinformationen des Fahrzeugs (V) zu erfassen, wobei die Fernbereichsinformationen Informationen entsprechen, die das Fahrzeug (V) jenseits eines durch den Sensor (14) erkennbaren Bereichs umgeben und von einer Karteninformationsspeichereinheit (13) erfasst werden, die Karteninformationen speichert;
eine Geschwindigkeitsplanungseinheit (43), die dazu konfiguriert ist, einen Geschwindigkeitsbefehlswert als Fahrziel des Fahrzeugs (V) basierend auf den Nahbereichsinformationen und den Fernbereichsinformationen zu erzeugen;
eine Routenplanungseinheit (42), die dazu konfiguriert ist, einen Routenbefehlswert (P) als Fahrziel des Fahrzeugs (V) basierend auf den Nahbereichsinformationen zu erzeugen, wobei die Geschwindigkeitsplanungseinheit (43) den Geschwindigkeitsbefehlswert des Fahrzeugs (V) basierend auf dem Routenbefehlswert (P) erzeugt; und
eine Fernbereichsrouten-Erzeugungseinheit (43b), die dazu konfiguriert ist, basierend auf den Fernbereichsinformationen eine Fernbereichsroute (F) als Route zu erzeugen, die sich über den Routenbefehlswert (P) hinaus erstreckt,
**dadurch gekennzeichnet, dass** die Geschwindigkeitsplanungseinheit (43) dazu konfiguriert ist, aus dem auf dem Routenbefehlswert (P) basierenden Geschwindigkeitsbefehlswert und dem auf der Fernbereichsroute (F) basierenden Geschwindigkeitsbefehlswert den Geschwindigkeitsbefehlswert mit einer kleineren Geschwindigkeit auszuwählen und den ausgewählten Geschwindigkeitsbefehlswert auszugeben.

2. Fahrzeugbewegungssteuervorrichtung (2) nach Anspruch 1, wobei die Geschwindigkeitsplanungseinheit (43) den Geschwindigkeitsbefehlswert erzeugt, bei dem eine physikalische Größe innerhalb eines vorgegebenen Werts liegt, wobei die physikalische Größe mit einem Verhalten des Fahrzeugs (V) in Verbindung steht, wenn das Fahrzeug (V) entlang des Routenbefehlswerts (P) und der Fernbereichsroute (F) fährt.

3. Fahrzeugbewegungssteuervorrichtung (2) nach Anspruch 1 oder 2, wobei die Geschwindigkeitsplanungseinheit (43) basierend auf einer erforderlichen Berechnungslast oder Genauigkeit der Fernbereichsinformationen die Priorität von Informationen zur Verwendung zum Erzeugen des Geschwindigkeitsbefehlswerts ändert oder Informationen zur Verwendung zum Erzeugen des Geschwindigkeitsbefehlswerts auswählt.

4. Fahrzeugbewegungssteuerverfahren, umfassend die Schritte:
Erfassen von Nahbereichsinformationen eines Fahrzeugs (V), wobei die Nahbereichsinformationen Informationen entsprechen, die das Fahrzeug (V) umgeben und von einem Sensor (14) erfasst werden, der eine Umgebung des Fahrzeugs (V) erkennt;
Erfassen von Fernbereichsinformationen des Fahrzeugs (V), wobei die Fernbereichsinformationen Informationen entsprechen, die das Fahrzeug (V) jenseits eines durch den Sensor (14) erkennbaren Bereichs umgeben und von einer Karteninformationsspeichereinheit (13) erfasst werden, die Karteninformationen speichert;
Erzeugen eines Geschwindigkeitsbefehlswerts als Fahrziel des Fahrzeugs (V) basierend auf den Nahbereichsinformationen und den Fernbereichsinformationen;
Erzeugen eines Routenbefehlswerts (P) als Fahrziel des Fahrzeugs (V) basierend auf den Nahbereichsinformationen;
Erzeugen des Geschwindigkeitsbefehlswerts des Fahrzeugs (V) basierend auf dem Routenbefehlswert (P);
Erzeugen einer Fernbereichsroute (F) als Route, die sich über den Routenbefehlswert (P) hinaus erstreckt, basierend auf den Fernbereichsinformationen; und
Auswählen des Geschwindigkeitsbefehlswerts mit einer kleineren Geschwindigkeit aus dem auf dem Routenbefehlswert (P) basierenden Geschwindigkeitsbefehlswert und dem auf der Fernbereichsroute (F) basierenden Geschwindigkeitsbefehlswert und Ausgeben des ausgewählten Geschwindigkeitsbefehlswerts.

## Revendications

1. Dispositif (2) de commande de mouvement de véhicule comprenant :
une unité (41) d'acquisition d'informations de proximité configurée pour acquérir des informations de proximité d'un véhicule (V), dans lequel les informations de proximité correspondent à des informations autour du véhicule (V) acquises depuis un capteur (14) qui détecte un environnement autour du véhicule (V) ;
une unité d'acquisition d'informations à longue distance configurée pour acquérir des informations à longue distance du véhicule (V), dans lequel les informations à longue distance correspondent à des informations autour du véhicule (V) au-delà d'une zone détectable par le capteur (14) acquises depuis une unité (13) de stockage d'informations cartographiques qui stocke des informations cartographiques ;
une unité (43) de planification de vitesse configurée pour générer une valeur de commande de vitesse comme une cible de déplacement du véhicule (V), sur la base des informations de proximité et des informations à longue distance ;
une unité (42) de planification d'itinéraire configurée pour générer une valeur (P) de commande d'itinéraire comme la cible de déplacement du véhicule (V), sur la base des informations de proximité, dans lequel l'unité (43) de planification de vitesse génère la valeur de commande de vitesse du véhicule (V) sur la base de la valeur (P) de commande d'itinéraire ; et
une unité (43b) de génération d'itinéraire à longue distance configurée pour générer un itinéraire à longue distance (F) comme un itinéraire s'étendant au-delà de la valeur (P) de commande d'itinéraire, sur la base des informations à longue distance,
**caractérisé en ce que** l'unité (43) de planification de vitesse est configurée pour sélectionner, à partir de la valeur de commande de vitesse sur la base de la valeur (P) de commande d'itinéraire et de la valeur de commande de vitesse sur la base de l'itinéraire à longue distance (F), la valeur de commande de vitesse à une vitesse plus petite, et délivre en sortie la valeur de commande de vitesse sélectionnée.

2. Dispositif (2) de commande de mouvement de véhicule selon la revendication 1, dans lequel l'unité (43) de planification de vitesse génère la valeur de commande de vitesse à laquelle une quantité physique est à l'intérieur d'une valeur spécifiée, la quantité physique se rapportant à un comportement du véhicule (V) lorsque le véhicule (V) se déplace le long de la valeur (P) de commande d'itinéraire et de l'itinéraire à longue distance (F).

3. Dispositif (2) de commande de mouvement de véhicule selon la revendication 1 ou 2, dans lequel, sur la base d'une charge ou d'une précision de calcul requise des informations à longue distance, l'unité (43) de planification de vitesse change une priorité d'informations à utiliser pour générer la valeur de commande de vitesse ou sélectionne des informations à utiliser pour générer la valeur de commande de vitesse.

4. Procédé de commande de mouvement de véhicule comprenant les étapes de :
acquisition d'informations de proximité d'un véhicule (V), dans lequel les informations de proximité correspondent à des informations autour du véhicule (V) acquises depuis un capteur (14) qui détecte un environnement autour du véhicule (V) ;
acquisition d'informations à longue distance du véhicule (V), dans lequel les informations à longue distance correspondent à des informations autour du véhicule (V) au-delà d'une zone détectable par le capteur (14) acquises depuis une unité (13) de stockage d'informations cartographiques qui stocke des informations cartographiques ;
génération d'une valeur de commande de vitesse comme une cible de déplacement du véhicule (V), sur la base des informations de proximité et des informations à longue distance ;
génération d'une valeur (P) de commande d'itinéraire comme la cible de déplacement du véhicule (V), sur la base des informations de proximité ;
génération de la valeur de commande de vitesse du véhicule (V) sur la base de la valeur (P) de commande d'itinéraire ;
génération d'un itinéraire à longue distance (F) comme un itinéraire s'étendant au-delà de la valeur (P) de commande d'itinéraire, sur la base des informations à longue distance ; et
sélection, à partir de la valeur de commande de vitesse sur la base de la valeur (P) de commande d'itinéraire et de la valeur de commande de vitesse sur la base de l'itinéraire à longue distance (F), de la valeur de commande de vitesse à une vitesse plus petite, et délivrance en sortie de la valeur de commande de vitesse sélectionnée.
